(19) Europäisches Patentamt
European Patent Office
Office européen des brevets

(11) **EP 2 443 593 B1**

(12) **FASCICULE DE BREVET EUROPEEN**

(45) Date de publication et mention
de la délivrance du brevet:
**09.09.2015 Bulletin 2015/37**

(51) Int Cl.:
***G06K 19/07*** *(2006.01)*

(21) Numéro de dépôt: **10734221.4**

(86) Numéro de dépôt international:
**PCT/FR2010/051090**

(22) Date de dépôt: **03.06.2010**

(87) Numéro de publication internationale:
**WO 2010/146277 (23.12.2010 Gazette 2010/51)**

(54) **RÉCUPÉRATION D'ÉNERGIE PAR UN TRANSPONDEUR ÉLECTROMAGNÉTIQUE**

ENERGIEWIEDERGEWINNUNG DURCH EINEN ELEKTROMAGNETISCHEN TRANSPONDER

ENERGY RECOVERY BY AN ELECTROMAGNETIC TRANSPONDER

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **19.06.2009 FR 0954148**

(43) Date de publication de la demande:
**25.04.2012 Bulletin 2012/17**

(73) Titulaire: **ST Microelectronics (Rousset) SAS
13790 Rousset (FR)**

(72) Inventeur: **WUIDART, Luc
F-83910 Pourrieres (FR)**

(74) Mandataire: **Thibon, Laurent et al
Cabinet Beaumont
1, rue Champollion
38000 Grenoble (FR)**

(56) Documents cités:
**EP-A1- 0 999 517    EP-A1- 1 045 325**

**Description**

Domaine de l'invention

La présente invention concerne de façon générale des systèmes utilisant des transpondeurs, c'est-à-dire des émetteurs-récepteurs (généralement mobiles) susceptibles de communiquer sans contact et sans fil avec un terminal.
L'invention concerne plus particulièrement la récupération d'énergie par un transpondeur.

Exposé de l'art antérieur

On distingue généralement deux catégories de transpondeurs selon qu'ils sont ou non équipés d'une batterie.
Les transpondeurs dits passifs extraient l'énergie nécessaire au fonctionnement des circuits électroniques qu'ils comportent d'un champ haute fréquence rayonné par un terminal avec lequel ils communiquent. De tels transpondeurs sont généralement réservés aux transmissions à faible distance (de l'ordre de quelques mètres). Le stockage de l'énergie captée du terminal s'effectue par un condensateur connecté à l'antenne du transpondeur.
Les transpondeurs dits actifs comportent une batterie d'où ils tirent l'énergie nécessaire à leur fonctionnement. De tels transpondeurs sont susceptibles de fonctionner à plus grande portée (jusqu'à quelques centaines de mètres) dans la mesure où ils peuvent se passer d'un transfert d'énergie entre le terminal et le transpondeur. Les transpondeurs actifs profitent généralement de situations dans lesquelles ils se trouvent à faible distance d'un terminal pour recharger la batterie qu'ils comportent.
Par exemple, le document EP-A-0 999 517 (ou US-B-6,462,647) décrit un transpondeur actif rechargeable équipé d'un condensateur de stockage pour stocker de l'énergie provenant d'un signal radioélectrique reçu, des moyens de charge étant prévus pour recharger une batterie à partir de l'énergie stockée dans le condensateur.
Le document US-B-6,944,424 décrit une étiquette électronique capable d'être alimentée par une batterie interne et, de façon passive, par un champ radiofréquence. Un dispositif de stockage d'énergie étant couplé à la batterie pour permettre sa recharge.
L'énergie issue du couplage électromagnétique entre le transpondeur et le terminal qui est susceptible d'être utilisée pour recharger la batterie du transpondeur est souvent insuffisante et/ou conduit à un temps de recharge trop long pour être efficace. Il en découle que, dans de nombreux cas, un transpondeur actif cesse en pratique de fonctionner à longue distance une fois que sa batterie d'origine est déchargée, sauf à laisser longuement ce transpondeur à portée d'un terminal pour qu'il se recharge ce qui n'est pas toujours aisé.
Par exemple, dans un véhicule automobile où le transpondeur est constitué par la clé du véhicule, la clé reste à courte distance du terminal que contient le véhicule pendant toute la durée des trajets. Elle peut donc être rechargée pendant cette période. Cependant, lorsque le véhicule n'est pas utilisé, la clé n'est plus à portée du terminal du véhicule et n'est donc pas rechargée.
Dans d'autres applications, il est quasi impossible que le transpondeur reste longtemps à portée du terminal avec lequel il est censé communiquer. Par exemple, pour des cartes à puce utilisées dans les transports, la durée pendant laquelle le transpondeur se trouve à portée d'un terminal correspond généralement au temps d'effectuer un échange d'informations et ne permet pas toujours de recharger correctement une batterie. De plus, pour des questions d'anti collision des échanges entre les nombreux transpondeurs et terminaux qui sont, dans ce genre d'application, proches les uns des autres, la communication (donc la recharge) n'est établie qu'en couplage très proche (moins de 10 centimètres), ce qui revient en pratique à devoir poser la carte sur le boîtier du terminal dans une zone désignée correspondant au plus près de l'antenne.
De plus, des transpondeurs d'un type donné ne sont généralement capables d'être rechargés qu'à partir de terminaux dédiés, ce qui n'est pas toujours commode.
Des problèmes de récupération d'énergie se posent de façon similaire pour des transpondeurs passifs, où on souhaite généralement optimiser la récupération d'énergie pour optimiser la transmission.

Résumé

Le document EP-A-0999517 décrit un transpondeur actif rechargeable.
Le document EP-A-1045325 décrit un procédé de détection de distance entre un transpondeur électromagnétique et une borne.
Il serait souhaitable de disposer d'un transpondeur, d'un terminal et/ou de communication avec des transpondeurs, d'un système de transpondeurs, qui pallient tout ou partie des inconvénients des systèmes actuels.
En particulier, il serait souhaitable de disposer d'un transpondeur capable de récupérer de l'énergie de façon optimisée en tirant profit même de courtes périodes d'exposition du transpondeur au champ de téléalimentation.
Il serait également souhaitable de disposer d'un transpondeur capable de se recharger de façon optimisée en tirant profit de courtes périodes d'exposition du transpondeur au champ de téléalimentation.

Il serait également souhaitable de préserver les fonctionnalités d'un transpondeur actif et d'un transpondeur passif au sein d'un même dispositif.

Il serait également souhaitable qu'un transpondeur optimise sa récupération d'énergie lorsqu'il est à portée de différents terminaux sans requérir des terminaux dédiés.

Plus généralement, il serait souhaitable d'optimiser l'exploitation par le transpondeur de l'énergie qu'il reçoit d'un terminal.

Pour atteindre tout ou partie de ces objets ainsi que d'autres, on prévoit un procédé de récupération d'énergie par un transpondeur électromagnétique dans le champ d'un terminal tel que défini dans la revendication 1

On prévoit également, un transpondeur électromagnétique tel que défini dans la revendication 7. D'autres modes de réalisation sont définis dans les revendications dépendantes.

Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :

la figure 1 est une représentation très schématique d'un système à transpondeur du type auquel s'applique à titre d'exemple la présente invention ;

la figure 2 est un schéma bloc simplifié d'un terminal et d'un transpondeur d'un système de communication à transpondeur électromagnétique ;

la figure 3 illustre un exemple d'allure de la tension aux bornes du circuit oscillant du transpondeur en fonction du facteur de couplage ;

la figure 4 est un schéma bloc d'un mode de réalisation d'un transpondeur adapté à évaluer son facteur de couplage avec un terminal ;

la figure 5 est un schéma bloc fonctionnel illustrant un mode de mise en oeuvre du procédé de recharge ; et

la figure 6 est un schéma bloc d'un mode de réalisation d'un transpondeur adapté à la mise en oeuvre du procédé de recharge.

Description détaillée

De mêmes éléments ont été désignés par de mêmes références aux différentes figures. Par souci de clarté, seuls les étapes et éléments utiles à la compréhension de l'invention ont été représentés et seront décrits. En particulier, les communications entre le transpondeur et le terminal n'ont pas été détaillées, l'invention étant compatible avec toute communication usuelle. De plus, les fonctions susceptibles d'être mises en oeuvre par un terminal ou par un transpondeur, autres que la détermination du facteur de couplage par ce transpondeur, n'ont pas non plus été détaillées, l'invention étant, là encore, compatible avec toute fonction usuelle d'un terminal ou d'un transpondeur.

L'invention sera décrite par la suite en relation avec un exemple d'application à un transpondeur actif rechargeable. Tout ce qui sera décrit par la suite s'applique toutefois également à un transpondeur passif et à l'optimisation de sa récupération d'énergie quand il est dans le champ d'un transpondeur.

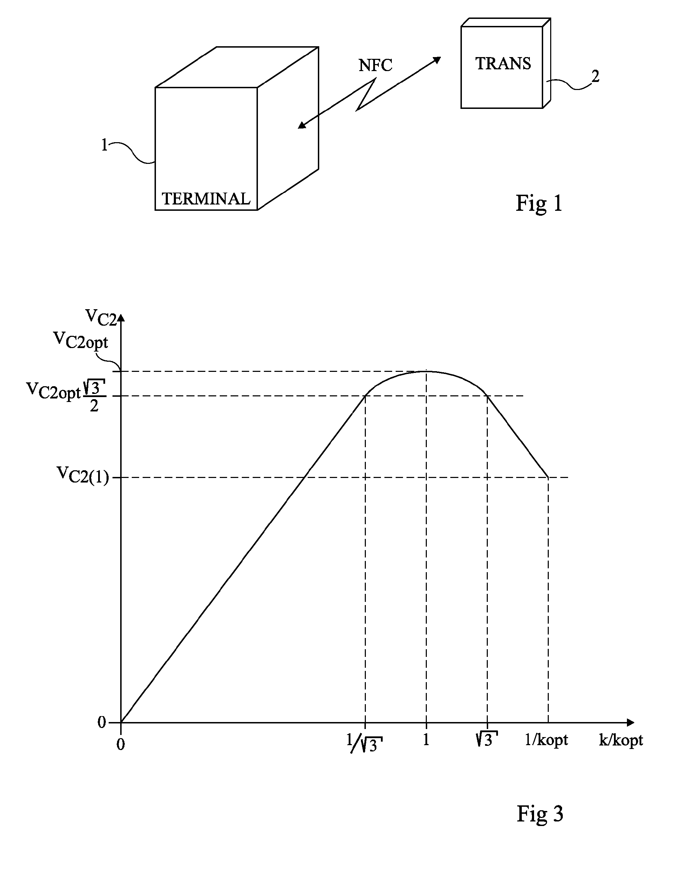

La figure 1 est un schéma bloc d'un système de communication à transpondeur électromagnétique. Un terminal 1 (TERMINAL) est susceptible de communiquer en champ proche (par exemple selon un protocole NFC - Near Field Communication) avec un élément distant, à savoir un transpondeur 2 (TRANS).

Le terminal peut prendre différentes formes, par exemple, une borne de validation de titres de transport, un lecteur de passeports électroniques, un ordinateur portable, un dispositif mobile de communication (téléphone cellulaire, assistant numérique personnel - PDA, etc.), un boîtier électronique de démarrage d'un véhicule automobile, etc.

Le transpondeur peut de même prendre différentes formes, par exemple, une carte à puce, un titre de transport électronique, un passeport électronique, un terminal de télécommunication (téléphone cellulaire, PDA, etc.), une étiquette électronique, etc.

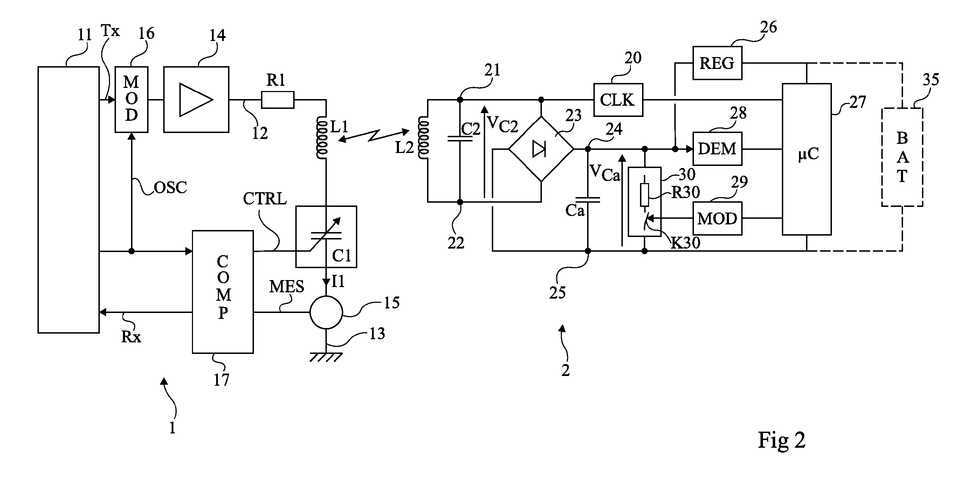

La figure 2 représente, de façon très schématique et simplifiée, un exemple de terminal 1 et de transpondeur 2.

Le terminal 1 comporte un circuit oscillant, généralement série, formé d'une inductance L1 en série avec un condensateur C1 et une résistance R1. Ce circuit oscillant série est, dans l'exemple de la figure 2, connecté entre une borne 12 de sortie d'un amplificateur ou coupleur d'antenne 14 et une borne 13 à un potentiel de référence (généralement la masse). Un élément 15 de mesure du courant dans le circuit oscillant est intercalé, par exemple, entre l'élément capacitif C1 et la masse 13. Cet élément de mesure 15 fait partie d'une boucle de régulation de phase qui sera décrite par la suite. L'amplificateur 14 reçoit un signal de transmission haute fréquence issu d'un modulateur 16 (MOD) qui reçoit une fréquence de référence (signal OSC) par exemple d'un oscillateur à quartz (non représenté). Le modulateur 16 reçoit si besoin un signal Tx provenant d'un circuit 11 de commande et d'exploitation des transmissions. Ce circuit 11 est généralement pourvu d'un microprocesseur de traitement de commandes et des données, communiquant avec différents circuits d'entrée/sortie (clavier, écran, élément d'échange avec un serveur, etc.) et/ou de traitement non détaillés. Les éléments du terminal 1 tirent le plus souvent l'énergie nécessaire à leur fonctionnement d'un circuit d'alimentation (non représenté) raccordé, par exemple, au réseau de distribution électrique (secteur) ou à une batterie (par exemple, celle d'un véhicule automobile ou d'un téléphone ou ordinateur portable). Le modulateur 16 fournit une porteuse haute fréquence (par exemple, à 13,56 MHz) au circuit oscillant série L1-C1 qui engendre un champ magnétique.

L'élément capacitif C1 est, par exemple, un élément à capacité variable et commandable par un signal CTRL. Cet élément participe à la régulation de phase du courant I1 dans l'antenne L1 par rapport à un signal de référence. Cette régulation est une régulation du signal haute fréquence, c'est-à-dire du signal de la porteuse correspondant au signal fourni à l'amplificateur 14 en l'absence de données Tx à transmettre. La régulation est effectuée en faisant varier la capacité C1 du circuit oscillant du terminal de façon à maintenir le courant dans l'antenne en relation de phase constante avec un signal de référence. Ce signal de référence correspond, par exemple, au signal OSC fourni au modulateur 14. Le signal CTRL est issu d'un circuit 17 (COMP) dont le rôle est de détecter l'écart de phase par rapport au signal de référence et de modifier en conséquence la capacité de l'élément C1. Le comparateur reçoit une information MES sur le courant I1 dans le circuit oscillant détecté par l'élément de mesure 15 (par exemple, un transformateur d'intensité ou une résistance).

Un transpondeur 2, apte à coopérer avec le terminal 1, comporte un circuit oscillant, par exemple parallèle, formé d'une inductance L2 en parallèle avec un condensateur C2 entre deux bornes 21 et 22. Le circuit oscillant parallèle (appelé circuit résonant en réception) est destiné à capter le champ magnétique engendré par le circuit oscillant L1-C1 du terminal 1. Les circuits L2-C2 et L1-C1 sont accordés sur une même fréquence de résonance (par exemple 13,56 MHz). Les bornes 21 et 22 sont reliées à deux bornes d'entrée alternatives d'un pont redresseur 23 (le plus souvent double alternance). Les bornes de sortie redressée du pont 23 définissent respectivement une borne positive 24 et une borne de référence 25. Un condensateur Ca est connecté entre les bornes 24 et 25 de façon à lisser la tension redressée. Le cas échéant, l'énergie récupérée sert à recharger une batterie non représentée.

Quand le transpondeur 2 se trouve dans le champ du terminal 1, une tension haute fréquence est engendrée aux bornes du circuit résonant L2-C2. Cette tension, redressée par le pont 23 et lissée par le condensateur Ca, fournit une tension d'alimentation à des circuits électroniques du transpondeur par l'intermédiaire d'un régulateur de tension 26 (REG). Ces circuits comprennent généralement une unité de traitement 27 (par exemple un microcontrôleur $\mu$C) associée à une mémoire (non représentée), un démodulateur 28 (DEM) des signaux éventuellement reçus du terminal 1, et un modulateur 29 (MOD) pour transmettre des informations au terminal. Le transpondeur est généralement synchronisé au moyen d'une horloge (CLK) extraite, par un bloc 20, du signal haute fréquence récupéré, avant redressement, sur une des bornes 21 ou 22. Le plus souvent, tous les circuits électroniques du transpondeur 2 sont intégrés dans une même puce.

Dans un transpondeur passif, l'énergie est stockée temporairement dans le condensateur Ca (ou dans un autre condensateur en aval du régulateur 26. Dans un transpondeur actif, une batterie 35 (BAT) représentée en pointillés en figure 2 en parallèle du microcontrôleur stocke l'énergie récupérée.

Pour transmettre des données du terminal 1 vers le transpondeur, le circuit 16 module (généralement en amplitude) la porteuse (signal OSC) en fonction du signal Tx. Côté transpondeur 2, ces données sont démodulées par le démodulateur 28 à partir de la tension $V_{Ca}$. Le cas échéant, le démodulateur prélève le signal à démoduler en amont du pont de redressement.

Pour transmettre des données du transpondeur 2 vers le terminal 1, le modulateur 29 commande un étage de modulation 30 (rétromodulation) de la charge constituée par les circuits du transpondeur sur le champ magnétique produit par le terminal. Cet étage est généralement constitué d'un interrupteur électronique K30 (par exemple, un transistor) et d'une résistance R30 (ou d'une capacité), en série entre les bornes 24 et 25. L'interrupteur K30 est commandé à une fréquence (par exemple, 847,5 kHz) dite de sous-porteuse, nettement inférieure (généralement avec un rapport d'au moins 10) à la fréquence du signal d'excitation du circuit oscillant du terminal 1. Lorsque l'interrupteur K30 est fermé, le circuit oscillant du transpondeur est soumis à un amortissement supplémentaire par rapport à la charge constituée par les circuits 20, 26, 27, 28, et 29 de sorte que le transpondeur prélève une quantité d'énergie plus importante du champ magnétique haute fréquence. Côté terminal 1, l'amplificateur 14 maintient constante l'amplitude du signal d'excitation haute fréquence. Par conséquent, la variation d'énergie du transpondeur se traduit par une variation d'amplitude et de phase du courant dans l'antenne L1. Cette variation est détectée par un démodulateur d'amplitude ou de phase du terminal. Dans le mode de réalisation illustré en figure 2, le comparateur 17 intègre un démodulateur de phase servant également à démoduler le signal provenant du transpondeur. Par conséquent, ce comparateur 17 fournit un signal Rx restituant une rétromodulation éventuelle de données reçues d'un transpondeur au circuit 11. D'autres circuits de démodulation peuvent être prévus, par exemple un circuit exploitant une mesure de la tension aux bornes du condensateur C1.

De nombreuses variantes existent pour coder/décoder et moduler/démoduler les communications entre un transpondeur et un terminal.

Le temps de réponse de la boucle de régulation de phase est suffisamment long pour ne pas gêner la rétromodulation éventuelle provenant d'un transpondeur, et suffisamment courte devant la vitesse de passage d'un transpondeur dans le champ du terminal. On peut parler de régulation statique par rapport aux fréquences de modulation (par exemple, la fréquence de la porteuse de téléalimentation de 13,56 MHz et la fréquence de rétromodulation de 847,5 KHz utilisée pour transmettre des données du transpondeur vers la borne).

Un exemple de terminal à régulation de phase est décrit dans le document EP-A-0 857 981.

Le fait que la phase soit régulée côté terminal permet d'exploiter des mesures de courant et de tension dans le circuit oscillant du transpondeur pour en déduire des informations relatives au couplage du transpondeur lorsqu'il est dans le champ du terminal. Le coefficient de couplage entre le circuit oscillant du terminal et celui du transpondeur dépend essentiellement de la distance séparant le transpondeur du terminal. Le coefficient de couplage, noté k, est toujours compris entre 0 et 1. Il peut être défini par la formule :

$$k \ = \ \frac{M}{\sqrt{L1 \cdot L2}} \ , \qquad\qquad \text{(formule 1)}$$

dans laquelle M représente l'inductance mutuelle entre les inductances L1 et L2 des circuits oscillants du terminal et du transpondeur.

On définit un couplage optimum comme étant la position à laquelle la tension $V_{C2}$ aux bornes du circuit oscillant du transpondeur est maximale. Ce couplage optimum, noté $k_{opt}$, peut s'exprimer :

$$k_{opt} = \sqrt{\frac{L2}{L1} \cdot \frac{R1}{R2}} \ , \qquad\qquad \text{(formule 2)}$$

où R2 représente la résistance équivalente à la charge (load) constituée par les éléments du transpondeur sur son propre circuit oscillant. En d'autres termes, la résistance R2 représente la résistance équivalente de tous les circuits (microprocesseur, moyen de rétromodulation, etc.) du transpondeur 2, ramenée en parallèle sur le condensateur C2 et l'inductance L2 (avant ou après le pont redresseur). On appellera "charge résistive" la conductance apportée par les circuits du transpondeur, donc leur consommation. Le niveau de cette charge est symbolisé par la résistance R2 en parallèle aux bornes du circuit oscillant. Dans la formule 2 ci-dessus, on a négligé la résistance série de l'inductance L1 (antenne du terminal). On peut également considérer que la valeur de cette résistance série est, par simplification, incluse dans la valeur de la résistance R1.

La figure 3 représente un exemple d'allure de la tension $V_{C2}$ récupérée côté transpondeur en fonction du couplage normalisé $k/k_{opt}$ par rapport au couplage optimum. La courbe part de l'origine des ordonnées (tension nulle) pour un couplage nul. Cela correspond à un éloignement du transpondeur et du terminal tel qu'aucun signal n'est capté par le transpondeur. La tension $V_{C2}$ atteint un maximum $V_{C2opt}$ pour le coefficient de couplage optimum $k_{opt}$ ($k/k_{opt}$ = 1), puis décroît jusqu'à une valeur intermédiaire VC2(1) atteinte au couplage k = 1.

Comme l'illustre la figure 3, la tension $V_{C2}$ passe par deux points d'inflexion pour des valeurs de couplage correspondant à des rapports $k/k_{opt} = 1/\sqrt{3}$ et $k/k_{opt} = \sqrt{3}$ , pour lesquels la tension $V_{C2}$ prend la valeur

$$V_{C2opt} \cdot \frac{\sqrt{3}}{2} \ .$$

Pour évaluer, côté transpondeur, son couplage avec le terminal, on exploite l'information de la tension $V_{C2}$ aux bornes de l'élément capacitif C2 de son circuit oscillant. Cette tension est donnée par la relation :

$$V_{C2} = \frac{I2}{\omega \cdot C_2} \ , \qquad\qquad \text{(formule 3)}$$

où I2 représente le courant dans le circuit oscillant du transpondeur, et où $\omega$ représente la pulsation du signal.

Le courant I2 est égal à :

$$I2 = \frac{M \cdot \omega \cdot I1}{Z2} \ , \qquad\qquad \text{(formule 4)}$$

où I1 représente le courant dans le circuit oscillant du terminal et où Z2 représente l'impédance du transpondeur.

L'impédance Z2 du transpondeur est donnée par la relation suivante :

$$Z2^2 = X2^2 + \left(\frac{L2}{R2.C2}\right)^2 ,$$ (formule 5)

où X2 représente la partie imaginaire de l'impédance du circuit oscillant ($X2 = \omega \cdot L2 - \frac{1}{\omega \cdot C2}$).

Par ailleurs, le courant I1 dans le circuit oscillant du terminal est donné par la relation :

$$I1 = \frac{Vg}{Z1_{app}} ,$$ (formule 6)

où Vg désigne une tension, dite de générateur, excitant le circuit oscillant du terminal, et où $Z1_{app}$ représente l'impédance apparente du circuit oscillant.

Le fait de réguler la phase du circuit oscillant du terminal permet que toutes les variations qui auraient tendance à modifier, de façon statique devant les fréquences de modulation, la partie imaginaire de la charge (load) constituée par le transpondeur, soient compensées par la boucle de régulation de phase. Ainsi, on s'assure qu'en fonctionnement statique la partie imaginaire de l'impédance $Z1_{app}$ est nulle. Par conséquent, cette impédance $Z1_{app}$ devient égale à la résistance apparente $R1_{app}$ (partie réelle de l'impédance) et peut s'exprimer sous la forme :

$$Z1_{app} = R1_{app} = R1 + \frac{k^2 \cdot \omega^2 \cdot L1 \cdot L2^2}{Z2^2 \cdot R2 \cdot C2} .$$ (formule 7)

Comme les circuits oscillants sont accordés, on peut considérer que la partie imaginaire X2 de l'impédance Z2 est, en première approximation, proche de zéro. Il en découle que la valeur de l'impédance Z2 peut s'écrire :

$$Z2 = \frac{L2}{R2 \cdot C2} .$$ (formule 8)

En reportant cette simplification dans les formules 4 et 7, et en reportant la formule 4 dans la formule 3, on obtient, pour la tension récupérée $V_{C2}$ aux bornes du circuit oscillant du transpondeur, la formule :

$$V_{C2} = k \cdot \sqrt{\frac{L1}{L2}} \cdot \frac{Vg}{\frac{R1}{R2} + k^2 \cdot \frac{L1}{L2}} .$$ (formule 9)

En position de couplage optimum $k_{opt}$, la tension maximale $V_{C2opt}$ est donc donnée par la formule (en combinant les formules 2 et 9) :

$$V_{C2opt} = \frac{Vg}{2} \cdot \sqrt{\frac{R2}{R1}} .$$ (formule 10)

On notera que la formule 9 n'est applicable qu'en considérant le circuit oscillant du transpondeur L2-C2 réglé à la fréquence d'accord, c'est-à-dire que $\omega \cdot \sqrt{L2 \cdot C2} = 1$.

En combinant les formules 9 et 10 et en exprimant le couplage de façon normalisée par le couplage optimum

(k/k$_{opt}$), on obtient l'expression suivante de la tension $V_{C2}$ :

$$V_{C2} = 2 \cdot V_{C2opt} \cdot \frac{\dfrac{k}{k_{opt}}}{1 + \left(\dfrac{k}{k_{opt}}\right)^2} \cdot \qquad \text{(formule 11)}$$

Pour une valeur de couplage k donnée, en considérant que l'impédance du circuit oscillant du terminal ne varie pas et que les circuits restent accordés, le rapport entre les coefficients courants k et les coefficients optimum k$_{opt]R20}$ et k$_{opt]R21}$, respectivement pour une résistance R2 de valeur R20 et de valeur R21 donne, d'après la formule 2, l'expression suivante :

$$\frac{\dfrac{k}{k_{opt]R20}}}{\dfrac{k}{k_{opt]R21}}} = \sqrt{\frac{R20}{R21}} \cdot \qquad \text{(formule 12)}$$

Toujours pour une valeur de couplage k donnée et en considérant que l'impédance du circuit oscillant du terminal ne varie pas et que les circuits restent accordés, le rapport entre les valeurs $V_{C2]R21}$ et $V_{C2]R20}$ de la tension $V_{C2}$, respectivement pour les valeurs R21 et R20 de la résistance R2, donne la relation suivante :

$$\frac{V_{C2]R21}}{V_{C2]R20}} = \frac{\left(\dfrac{k}{k_{opt]R20}}\right)^2 + 1}{\left(\dfrac{k}{k_{opt]R20}}\right)^2 + \dfrac{R20}{R21}} \cdot \qquad \text{(formule 13)}$$

Il ressort de la formule 13 qu'en augmentant la valeur de la résistance R2 d'une première valeur R20 vers une second valeur R21 supérieure (ce qui revient à diminuer la charge des circuits du transpondeur sur le circuit oscillant L2-C2), la tension $V_{C2]R21}$ sera supérieure à la tension $V_{C2]R20}$.

Pour optimiser la recharge du transpondeur, on se trouve confronté à une difficulté qui est de placer le transpondeur dans une configuration correspondant à un couplage inductif produisant une source d'énergie suffisante pour recharger sa batterie dans un temps acceptable.

Une autre difficulté réside dans le fait que le transpondeur à recharger ne connaît pas la position de son couplage inductif par rapport au couplage optimum où le maximum d'énergie est transféré depuis le terminal.

La formule 13 peut encore s'écrire :

$$\left(\frac{k}{k_{opt]R20}}\right)^2 = \frac{1 - \dfrac{V_{C2]R21}}{V_{C2]R20}} \cdot \dfrac{R20}{R21}}{\dfrac{V_{C2]R21}}{V_{C2]R20}} - 1} \cdot \qquad \text{(formule 14)}$$

Il ressort de la formule 14 qu'à partir d'une mesure de la tension $V_{C2}$ avec les deux valeurs de résistances R20 et R21, on peut obtenir le rapport du couplage courant sur le couplage optimum avec la charge équivalente à la résistance R20, ce qui fournit une information indirecte sur la position du couplage courant par rapport au couplage optimum avec la résistance R20. Pour effectuer cette évaluation, on prendre de préférence une valeur R21 de résistance R2 supérieure à la valeur R20.

En pratique, on ne mesure pas directement la tension aux bornes du circuit oscillant, mais la tension lissée aux bornes du condensateur $V_{Ca}$ en sortie du pont redresseur 23. Cette tension $V_{Ca}$ est proportionnelle à la tension $V_{C2}$. Comme on évalue des rapports de tension, il n'est pas nécessaire de connaître le coefficient de proportionnalité entre les tensions $V_{C2}$ et $V_{Ca}$. Dans un exemple de réalisation particulier, la mesure est effectuée par le microprocesseur. La mémorisation des valeurs des tensions mesurées s'effectue, soit de façon analogique, mais préférentiellement de façon numérique sur plusieurs bits dont le nombre dépend de la précision d'analyse souhaitée.

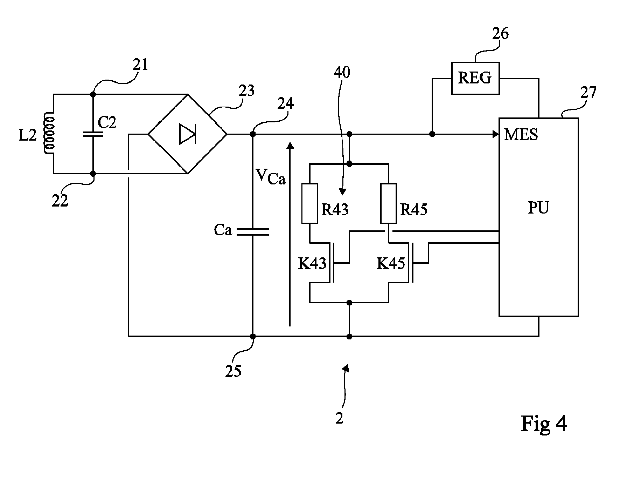

La figure 4 est un schéma-blocs d'un mode de réalisation d'un transpondeur 2, équipé pour déterminer automatiquement, lorsqu'il est dans le champ d'un terminal (non représenté), le couplage courant par rapport au couplage optimum. La représentation de la figure 4 est simplifiée par rapport à celle de la figure 2. En particulier, les éléments de démodulation, de rétromodulation et d'obtention de la fréquence d'horloge n'ont pas été illustrés.

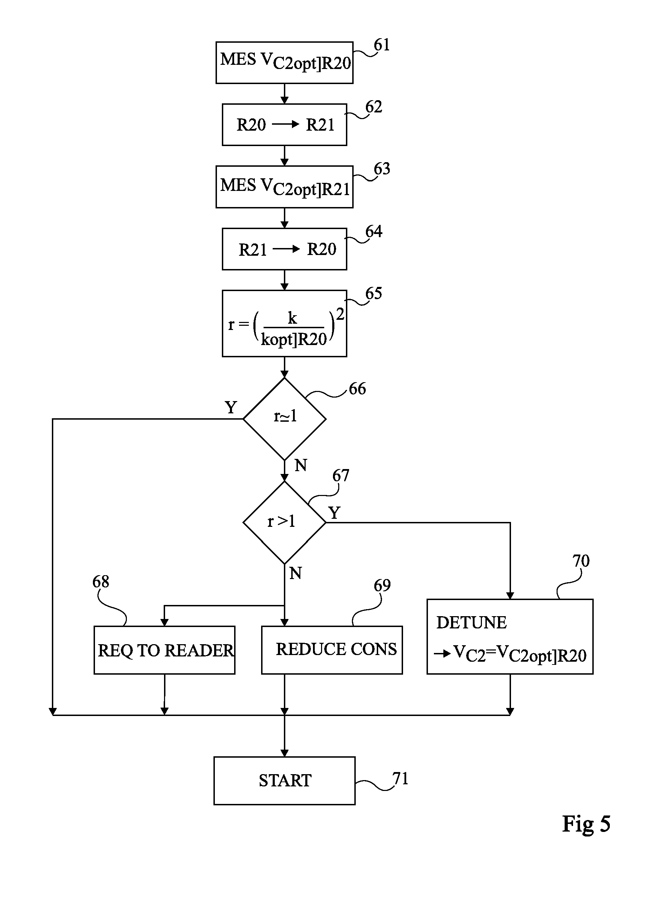

Comme précédemment, le transpondeur 2 est basé sur un circuit oscillant parallèle L2-C2 dont les bornes 21 et 22 sont reliées aux bornes d'entrée d'un pont de redressement 23. Entre les bornes 24 et 25 du pont redresseur 23, est prévu un circuit résistif commutable 40. Par exemple, deux résistances R43 et R45 sont connectées en parallèle en étant chacune en série avec un interrupteur K43, respectivement K45. Les interrupteurs K43 et K45 (par exemple, des transistors MOS) sont destinés à être commutés pour mettre en oeuvre le procédé de détermination de la position de couplage. L'unité de traitement 27 (PU) reçoit une information sur la tension $V_{Ca}$ sur une entrée MES pour mettre en oeuvre le procédé décrit ci-dessus. Dans l'exemple de la figure 5, lorsque les deux résistances R43 et R45 sont fonctionnellement connectées, la résistance R2 (charge des circuits du transpondeur) représente la valeur R20. La déconnexion d'une des résistances (par exemple, la résistance R43) augmente la résistance R2 vers la valeur R21. D'autres connexions et commutations peuvent être prévues selon la variante du procédé mis en oeuvre. Par exemple, une seule résistance commutable peut être utilisée en considérant qu'une des deux valeurs de la résistance R2 correspond à la charge résistive des autres circuits du transpondeur.

Selon un mode de réalisation préféré, la résistance commutable correspond à celle utilisée pour une rétromodulation résistive. On effectue une première mesure en commutant la résistance de rétromodulation pour qu'elle soit fonctionnellement dans le circuit (interrupteur K30 à l'état passant dans l'exemple de la figure 2). On mesure la tension $V_{C2]R20}$. Puis, on ouvre l'interrupteur K30 et on mesure la tension $V_{C2]R21}$. La mise en oeuvre du procédé décrit ne requiert alors aucune modification structurelle d'un transpondeur équipé d'un microcontrôleur. Il suffit de programmer ce microcontrôleur pour qu'il commute ainsi la résistance de rétromodulation.

Avec une valeur R20 de résistance R2, la formule 11 peut s'écrire (formule 15) :

$$V_{C2opt]R20} = \frac{V_{C2]R20}}{2}\left(\frac{k}{k_{opt]R20}} + \frac{k_{opt]R20}}{k}\right).$$

Ainsi, la mesure de $V_{C2]R20}$ et l'évaluation du rapport $k/k_{opt]R20}$ (formule 14) permettent d'évaluer, pour une charge donnée (pour une valeur R20 donnée de la résistance R2), la tension maximale téléalimentée récupérable $V_{C2opt]R20}$ si le couplage courant k était à son optimum.

Pour des couplages courants k inférieurs à l'optimum $k_{opt}$, le maximum se produit toujours à l'accord.

Par conséquent, pour une valeur donnée de charge R20 et à une position de couplage $k<k_{opt]R20}$, pour faire coïncider le couplage k avec l'optimum, on peut demander au terminal d'adapter sa résistance série R1. Une telle solution est décrite dans la demande de brevet européen EP-A-2 114 019 de la demanderesse.

Selon un autre mode de réalisation, on provoque une diminution de la consommation des circuits du transpondeur (par exemple en réduisant sa fréquence d'horloge) autres que sa batterie. Cela a pour effet de réduire la charge, donc d'augmenter la valeur de la résistance R2. Le couplage courant du transpondeur se rapproche alors de la position optimale.

Pour des couplages courants k supérieurs au couplage optimum $k_{opt}$, le maximum de tension ne se produit pas à l'accord.

On prévoit alors de provoquer un désaccord du circuit résonnant pour optimiser la charge de la batterie. Pour cela on prévoit, soit un élément capacitif C2 variable, soit des éléments capacitifs commutables en parallèle avec le condensateur C2.

Les valeurs de l'élément C2 pour lesquelles la tension $V_{C2}$ atteint le maximum $V_{C2opt]R20}$ sont réparties de manière symétrique de part et d'autre de la valeur d'accord. Ainsi, pour atteindre le maximum de tension, on désaccorde le circuit résonnant en augmentant ou en diminuant la valeur de son élément capacitif C2 jusqu'au moment où la tension est égale à la valeur $V_{C2opt]R20}$. La valeur $V_{C2opt]R20}$ est préalablement évaluée à partir de l'expression 15.

La figure 5 représente un organigramme d'un mode de mise en oeuvre d'un procédé de recharge d'un transpondeur.

On commence par évaluer la position du couplage courant par rapport au couplage optimum. Cette détermination est utilisée, notamment, pour déterminer s'il convient ou non de modifier l'accord ou si une variation de la consommation suffit.

L'évaluation de la position du couplage s'effectue en exploitant la formule 14.

Dans une première étape (bloc 61, MES $V_{C2opt]R20}$), on mesure et on mémorise la tension avec une première valeur R20 de résistance R2.

Puis (bloc 62, R20->R21), on augmente la valeur de résistance, par exemple, en commutant la résistance d'un étage de rétromodulation.

On mesure et on mémorise alors (bloc 63, MES $V_{C2opt]R21}$) la tension avec cette charge du circuit résonnant. Puis, on rebascule sur la résistance R20 (bloc 64, R21->R20).

Le microcontrôleur exploite alors la formule 14 pour déterminer (bloc 65, $r=(k/k_{opt]R20})^2$) le rapport r entre le couplage courant k et le couplage optimum avec la résistance R20, $k_{opt]R20}$.

Si le rapport est approximativement égal à 1 (sortie Y du bloc 66, r=1), cela signifie que la recharge (ou la récupération d'énergie) est optimale. On considère un rapport r satisfaisant s'il est approximativement égal à l'unité (par exemple compris entre 0,95 et 1,05) pour se laisser une tolérance dans les évaluations et les calculs. On pourrait aller jusqu'à des rapports compris entre $1/\sqrt{3}$ et $\sqrt{3}$ entre lesquels la pente de variation de la tension $V_{C2opt}$ est inférieure à la pente hors de cette plage. Dans cette situation, on démarre la transaction (bloc 71, START) et on considère que la recharge (ou la récupération d'énergie) sera correcte.

En variante, le rapport est évalué strictement par rapport à l'unité, sans marge de tolérance. Le risque est alors des réglages/corrections plus fréquents dans la mesure où le couplage est rarement stable.

Si le rapport est différent de l'unité (sortie N du bloc 66), on détermine s'il est supérieur ou inférieur à 1 (bloc 67 r>1 ?).

Si le rapport r est inférieur à 1, on peut soit demander au terminal (bloc 68, REQ TO READER) d'augmenter la puissance transmise, soit (bloc 69, REDUCE CONS) réduire la consommation du transpondeur pour accroître l'énergie utilisable pour la recharge de la batterie du transpondeur. Le choix entre l'une ou l'autre des possibilités dépend de l'application et notamment du souhait ou non d'intervenir du le terminal. En particulier, l'option du bloc 69 ne requiert aucune modification du terminal. Les deux options 68 et 69 sont combinables.

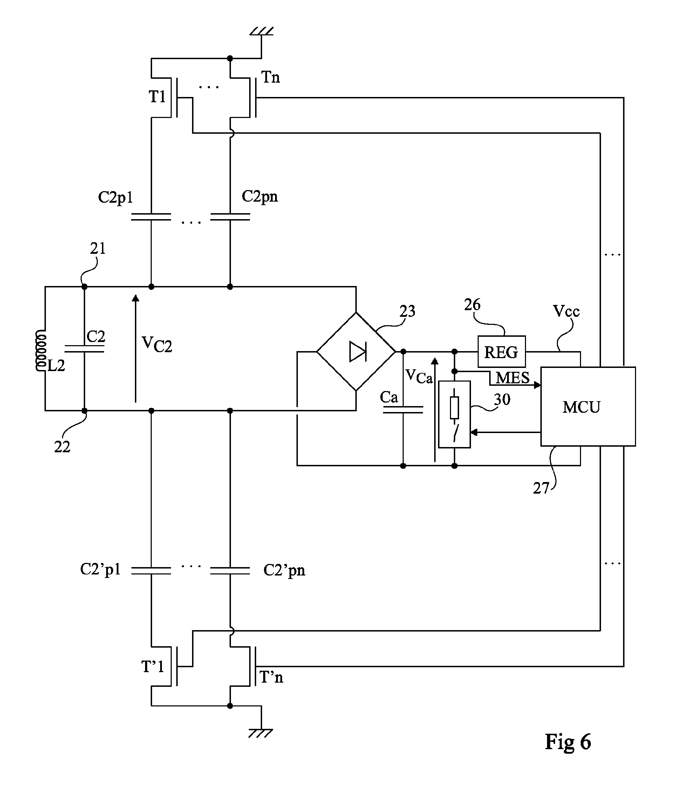

Si le rapport r est supérieur à 1, on provoque un désaccord du circuit oscillant (bloc 70, DETUNE -> $V_{C2}$ = $V_{C2opt]R20}$) jusqu'à faire correspondre le couplage courant à son optimum avec la résistance R20. Un exemple de circuit de désaccord sera décrit par la suite en relation avec la figure 6. On peut effectuer des réglages successifs en augmentant progressivement le désaccord. En variante, le microcontrôleur interroge une table de correspondance préalablement mémorisée (par exemple dans une phase d'apprentissage ou lors de la conception du transpondeur) pour connaître, à partir de la valeur du rapport r, l'amplitude du désaccord à apporter.

Une fois le réglage effectué (bloc 68, 69 ou 70), la transaction peut démarrer.

La figure 6 représente un mode de réalisation d'un transpondeur équipé d'un circuit de désaccord du condensateur C2.

Comme précédemment, le transpondeur 2 est basé sur un circuit oscillant parallèle L2-C2 dont les bornes 21 et 22 sont reliées aux bornes d'entrée d'un pont de redressement 23. L'unité de traitement 27 (PU) reçoit une information sur la tension $V_{Ca}$ sur une entrée MES pour mettre en oeuvre le procédé décrit ci-dessus. Le désaccord est obtenu en augmentant la capacité du circuit oscillant par une mise en parallèle de condensateurs C2pi et C2'pi (i étant compris entre 1 et n>=1) rendus commutables par des interrupteurs (par exemple des transistors MOS) Ti et T'i. Plus précisément, au moins un condensateur C2pi, respectivement C2'pi, en série avec un transistor Ti, respectivement T'i, est connecté entre la borne 21, respectivement 22, du circuit résonant L2-C2 et la masse. Les transistors Ti sont individuellement commandables par des signaux provenant du microcontrôleur 27 en fonction des mesures effectuées conditionnant l'amplitude souhaitée pour le désaccord. En variante, des condensateurs commutables sont connectés en parallèle sur le circuit oscillant. Toutefois, un avantage de la solution de la figure 6 est que les transistors sont plus facilement commandables car les signaux de commandes peuvent être référencés à la masse.

Dans l'exemple de la figure 6, la diminution de la consommation (bloc 69, figure 5) est provoquée par une diminution des fonctions ou applications utilisées dans le microcontrôleur, par exemple le faire fonctionner à fréquence d'horloge plus faible. La commutation de la valeur R20 à la valeur R21 peut utiliser le circuit 30 de rétromodulation résistive, commandé en tout ou rien. La mise en oeuvre de la mesure est particulièrement simple. Il suffit de programmer ce microcontrôleur pour qu'il commute ainsi la résistance de rétromodulation.

Les calculs requis pour évaluer le couplage courant sont suffisamment simples pour que leur temps d'exécution soit négligeable par rapport à la vitesse de déplacement d'un transpondeur devant un terminal (donc la vitesse de variation du coefficient de couplage). Les modes de réalisation décrits sont par ailleurs applicables au cas où le transpondeur reste posé sur une surface de réception du terminal, le couplage ne variant donc pas pendant toute la communication.

Les modes de réalisation décrits permettent d'optimiser la récupération d'énergie, que ce soit pour une utilisation directe ou pour la recharge d'une batterie du transpondeur, en évitant les inconvénients liés à un désaccord systématique.

L'évaluation du couplage peut être effectuée périodiquement pendant une communication. La seule précaution est de ne pas évaluer le couplage pendant une rétromodulation du transpondeur. Une première évaluation est par exemple effectuée dès que l'énergie récupérée par le transpondeur est suffisante pour que le microprocesseur 27 fonctionne. Puis, on effectue des mesures périodiques pendant la communication.

On notera que la détermination du couplage s'effectue sans qu'il soit nécessaire d'établir une communication avec le terminal.

De plus, la valeur du couplage optimum varie d'un terminal à un autre. Evaluer le couplage courant par rapport au couplage optimum tel que décrit ci-dessus permet de s'affranchir des caractéristiques d'un terminal donné et rend l'évaluation indépendante du terminal. Ainsi, un transpondeur équipé des moyens d'évaluation du couplage de l'invention peut fonctionner avec tout terminal existant.

Divers modes de réalisation avec diverses variantes ont été décrits ci-dessus. On notera que l'homme de l'art pourra combiner divers éléments de ces divers modes de réalisation et variantes sans faire preuve d'activité inventive.

**Revendications**

1.  Procédé de récupération d'énergie par un transpondeur électromagnétique (5) dans le champ d'un terminal (1), dans lequel :

    une première information, relative au niveau d'une tension continue (VCA) fournie par un redresseur (23) aux bornes d'un circuit oscillant (L2, C2) du transpondeur, est mesurée et mémorisée pour une première valeur (R20) de charge résistive (R2) ;
    une seconde information, relative au niveau de ladite tension continue, est mesurée et mémorisée pour une seconde valeur (R21) de charge résistive ;
    un rapport (r) entre le facteur de couplage courant du transpondeur avec le terminal et une position de couplage optimum ($k_{opt]R20}$) avec la première valeur (R20) de charge résistive (R2) est évalué à partir des première et deuxième informations (65) ; et
    un désaccord du circuit oscillant est provoqué si le rapport est supérieur à un premier seuil supérieur ou égal à l'unité.

2.  Procédé selon la revendication 1, dans lequel une réduction de la consommation des circuits du transpondeur est provoquée si le rapport (r) est inférieur à un second seuil inférieur ou égal à l'unité.

3.  Procédé selon la revendication 1 ou 2, dans lequel une augmentation de l'intensité du champ magnétique produit par le terminal (1) est provoquée si le rapport (r) est inférieur à un second seuil inférieur ou égal à l'unité.

4.  Procédé selon l'une quelconque des revendications 1 à 3, dans lequel une variation de la charge résistive (R2) entre les première et seconde valeurs (R20, R21) est obtenue en modifiant la consommation de circuits de traitement (27) que comporte le transpondeur.

5.  Procédé selon la revendication 4, dans lequel une variation de la charge résistive (R2) entre les première et seconde valeurs (R20, R21) est obtenue en commutant un élément résistif de rétromodulation (30) que comporte le transpondeur (2).

6.  Procédé selon l'une quelconque des revendications 1 à 5, dans lequel l'énergie récupérée sert, au moins partiellement, à la recharge d'une batterie que comporte le transpondeur.

7.  Transpondeur électromagnétique comportant :

    un circuit oscillant (L2, C2) en amont d'un circuit de redressement (23) propre à fournir une tension continue ($V_{Ca}$) lorsque le transpondeur se trouve dans le champ magnétique d'un terminal (1) ; et
    au moins une unité de traitement (27) programmée pour mettre en oeuvre le procédé selon l'une quelconque des revendications 1 à 6.

8.  Transpondeur selon la revendication 7, comportant en outre au moins un élément résistif commutable (30, 40) propre à être fonctionnellement connecté en parallèle sur le circuit oscillant.

9. Transpondeur selon la revendication 7 ou 8, comportant au moins un élément capacitif (C2pi, C2'pi) commutable (Ti, T'i) de désaccord du circuit oscillant.

**Patentansprüche**

1. Ein Verfahren zur Leistungswiedergewinnung durch einen elektromagnetischen Transponder (5) im Feld eines Anschlusses (1), wobei folgendes vorgesehen ist:

erste Daten, relativ zum Pegel einer Gleichspannung ($V_{Ca}$) vorgesehen durch einen Gleichrichter (23) an der Oszillatorschaltung (L2, C2) des Transponders, werden gemessen und als ein erster Wert (R20) der Widerstandslast (R2) gespeichert;
zweite Daten bezüglich des Pegels der erwähnten Gleichspannung werden gemessen und als ein zweiter Wert (R21) der Widerstandslast gespeichert;
ein Verhältnis (r) zwischen dem Stromkopplungsfaktor des Transponders mit dem Anschluss und einer Position optimaler Kopplung ($k_{opt]R20}$) mit dem ersten Wert (R20) der Widerstandslast (R2) wird aus den ersten und zweiten Daten ausgewertet (65); und
eine Verstimmung der Oszillationsschaltung wird bewirkt, wenn das Verhältnis größer ist als eine erste Schwelle größer als oder gleich 1.

2. Das Verfahren nach Anspruch 1, wobei eine Verminderung im Verbrauch der Transponderschaltungen bewirkt wird, wenn das Verhältnis (r) kleiner als eine zweite Schwelle oder gleich 1 ist.

3. Das Verfahren nach Anspruch 1 oder 2, wobei eine Erhöhung der Intensität des Magnetfeldes erzeugt durch den Anschluss 1 hervorgerufen wird, wenn das Verhältnis (r) kleiner ist als eine zweite Schwelle oder gleich 1 ist.

4. Das Verfahren nach einem der Ansprüche 1 bis 3, wobei eine Veränderung der Widerstandslast (R2) zwischen den ersten und zweiten Werten (R20, R21) erhalten wird durch modifizieren des Leistungsverbrauchs der Verarbeitungsschaltungen (27) im Transponder.

5. Das Verfahren nach Anspruch 4, wobei eine Veränderung der Widerstandslast (R2) zwischen den ersten und zweiten Werten (R20, R21) erhalten wird durch Schalten eines Widerstands-Retro-Modulationselements (30) in den Transponder (2).

6. Das Verfahren nach einem der Ansprüche 1 bis 5, wobei die wiedergewonnene Leistung mindestens teilweise verwendet wird, um eine Batterie im Transponder wieder aufzuladen.

7. Ein elektromagnetischer Transponder, der folgendes aufweist:

eine Oszillationsschaltung (L2, C2) stromaufwärts gegenüber einer Gleichrichterschaltung (23), die in der Lage ist eine Gleichspannung ($V_{Ca}$) vorzusehen, wenn der Transponder sich in dem Magnetfeld eines Anschlusses (1) befindet; und
mindestens eine Verarbeitungseinheit (27) programmiert zur Implementierung des Verfahrens nach einem der Ansprüche 1 bis 6.

8. Der Transponder nach Anspruch 7, wobei ferner mindestens ein schaltbares Widerstandselement (30, 40) vorgesehen ist, welches in der Lage ist funktionell parallel zu der Oszillatorschaltung geschaltet zu werden.

9. Der Transponder nach Anspruch 7 oder 8, wobei folgendes vorgesehen ist:

mindestens ein schaltbares (Ti, T'i) kapazitives Element (C2pi, C2'pi) zur Verstimmung der Oszillatorschaltung.

**Claims**

1. A method of power recovery by an electromagnetic transponder (5) in the field of a terminal (1), wherein:

first data, relative to the level of a D.C. voltage ($V_{Ca}$) provided by a rectifier (23) across the oscillating circuit (L2, C2) of the transponder, are measured and stored for a first value (R20) of resistive load (R2);

second data, relative to the level of said D.C. voltage, are measured and stored for a second value (R21) of resistive load;

a ratio (r) of the current coupling factor of the transponder and a position of optimum coupling ($k_{opt]R20}$) with the first value (R20) of resistive load (R2) is evaluated (65) from the first and second data; and

a detuning of the oscillating circuit is caused if the ratio is greater than a first threshold greater than or equal to one.

2. The method of claim 1, wherein a decrease in the consumption of the transponder circuits is caused if the ratio (r) is smaller than a second threshold smaller than or equal to one.

3. The method of claim 1 or 2, wherein an increase in the intensity of the magnetic field generated by the terminal (1) is caused if the ratio (r) is smaller than a second threshold smaller than or equal to one.

4. The method of any of claims 1 to 3, wherein a variation of the resistive load (R2) between the first and second values (R20, R21) is obtained by modifying the power consumption of the processing circuits (27) included in the transponder.

5. The method of claim 4, wherein a variation of the resistive load (R2) between the first and second values (R20, R21) is obtained by switching a resistive retromodulation element (30) included in the transponder (2).

6. The method of any of claims 1 to 5, wherein the recovered power is at least partially used to recharge a battery included in the transponder.

7. An electromagnetic transponder comprising:

an oscillating circuit (L2, C2) upstream of a rectifying circuit (23) capable of providing a D.C. voltage ($V_{Ca}$) when the transponder is in the magnetic field of a terminal (1); and

at least one processing unit (27) programmed to implement the method of any of claims 1 to 6.

8. The transponder of claim 7, further comprising at least one switchable resistive element (30, 40) capable of being functionally connected in parallel to the oscillating circuit.

9. The transponder of claim 7 or 8, comprising at least one switchable (Ti, T'i) capacitive element (C2pi, C2'pi) for detuning the oscillating circuit.

Fig 1

Fig 3

Fig 2

Fig 4

MES $V_{C2opt]R20}$  ⟋61

R20 ⟶ R21  ⟋62

MES $V_{C2opt]R21}$  ⟋63

R21 ⟶ R20  ⟋64

$r = \left( \dfrac{k}{k_{opt]R20}} \right)^2$  ⟋65

⟋66
$r \simeq 1$

Y ←

N

⟋67
$r > 1$

Y →

N

REQ TO READER  68

REDUCE CONS  69

DETUNE
→ $V_{C2}=V_{C2opt]R20}$  70

START  ⟋71

**Fig 5**

**Fig 6**

**EP 2 443 593 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0999517 A
- US 6462647 B
- US 6944424 B
- EP 1045325 A
- EP 0857981 A
- EP 2114019 A